# EUROPEAN PATENT APPLICATION

(11) **EP 1 868 411 A1**
(43) Date of publication of application: **19.12.2007**
(21) Application number: 06022805.3
(22) Date of filing: 02.11.2006
(51) Int. Cl.: H04R 3/00, H04M 1/60

(54) **Speaker system for portable electrical equipment**

(30) Priority: 13.06.2006 KR 20060053196
(71) Applicant: DIOSTECH Co., Ltd., Namsa-Myun Cheoin-Gu, Yongin-si Kyonggi do (KR)
(72) Inventor: Shin, Jung-Sik, Gyeonggi-do (KR); Jung, Joung-Hwa, Gyeonggi-do (KR); Kim, Pil-Nam, Gyeonggi-do (KR)
(74) Representative: Kaufmann, Ursula Josefine

(57) **Abstract**

A speaker system for a portable electrical equipment includes: a wireless receiving pack receiving an audio signal from the portable electrical equipment; and a speaker unit receiving the audio signal from the wireless receiving pack and outputting the audio signal as a sound, the speaker unit connected to the wireless receiving pack.

## Description

This application claims the benefit of Korean Patent Application No. 2006-0053196, filed on June 13, 2006, which is hereby incorporated by reference in its entirety.

### BACKGROUND OF THE INVENTION

### Field of the Invention

The present invention relates to a speaker system for a portable electrical equipment, and more particularly, to an external speaker system for a portable electrical equipment using wireless sending and receiving modules.

### Discussion of the Related Art

An internal speaker system or an earphone is widely used as a means of hearing a sound of a portable electrical equipment such as a mobile phone and a portable MP3 player. However, since the internal speaker system has a narrowband for the sound, a hearing sensitivity is poor. In addition, it is uncomfortable to put the earphone on and the number of users is restricted for the earphone.

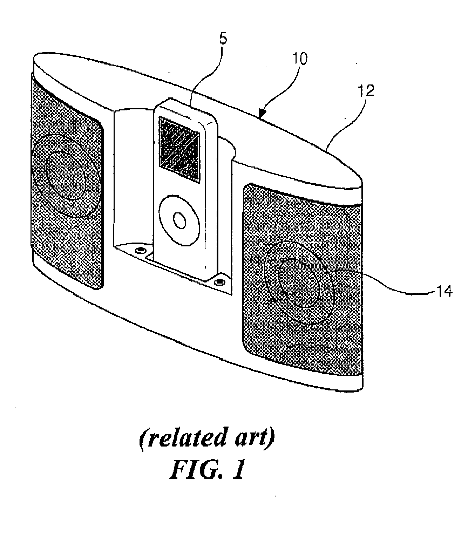

Accordingly, an external speaker system that is connected to the portable electrical equipment and outputs the sound has been suggested. FIG. 1 is a schematic perspective view showing an external speaker system according to the related art. In FIG. 1, a speaker unit 10 includes a cradle 12 supporting a portable electrical equipment 5 and a speaker 14 fixed to the cradle 12. The cradle 12 is connected to the portable electrical equipment 5 and transmits signals of the portable electrical equipment 5 to the speaker 14. While the portable electrical equipment 5 is supported by and connected to the cradle 12, an audio file is reproduced and a sound corresponding to the audio file is outputted through the speaker 14.

In the external speaker system, however, the sound is outputted through the speaker 14 only when the portable electrical equipment is supported by the cradle 12. Accordingly, a user far away from the speaker unit 10 should come closer to the speaker unit 10 to operate the portable electrical equipment 5. As a result, there exists uncomfortableness in usage of the speaker unit 10.

### SUMMARY OF THE INVENTION

Accordingly, the present invention is directed to a speaker system for a portable electrical equipment that substantially obviate one or more of the problems due to limitations and disadvantages of the related art.

An object of the present invention is to provide an external speaker system where an audio signal of a portable electrical equipment is transmitted to a speaker using wireless sending and receiving modules.

Additional features and advantages of the invention will be set forth in the description which follows, and in part will be apparent from the description, or may be learned by practice of the invention. These and other advantages of the invention will be realized and attained by the structure particularly pointed out in the written description and claims hereof as well as the appended drawings.

To achieve these and other advantages and in accordance with the purpose of the present invention, as embodied and broadly described, a speaker system for a portable electrical equipment includes: a wireless receiving pack receiving an audio signal from the portable electrical equipment; and a speaker unit receiving the audio signal from the wireless receiving pack and outputting the audio signal as a sound, the speaker unit connected to the wireless receiving pack.

In another aspect, a wireless receiving pack for a speaker unit and a portable electrical equipment includes: a wireless receiving module receiving an audio signal from the portable electrical equipment; an audio output terminal contacting the speaker unit and transmitting the audio signal to the speaker unit; and a power input terminal contacting the speaker unit and receiving a source power from the speaker unit, wherein the wireless receiving pack instead of the portable electrical equipment is detachably supported by the speaker unit.

It is to be understood that both the foregoing general description and the following , detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute apart of this specification, illustrate embodiments of the invention and together with the description serve to explain the principles of the invention.

FIG. 1 is a schematic perspective view showing an external speaker system according to the related art.

FIG. 2 is a schematic perspective view showing an external speaker system for a portable electrical equipment according to an embodiment of the present invention.

FIG. 3 is a schematic block diagram showing an external speaker system for a portable electrical equipment according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, similar reference numbers will be used to refer to the same or similar parts.

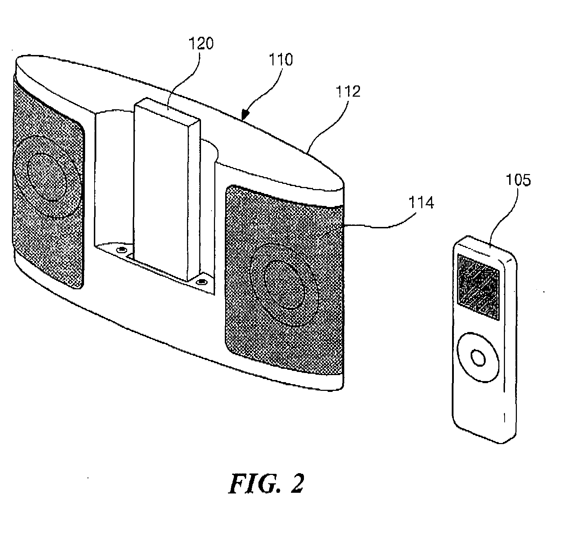

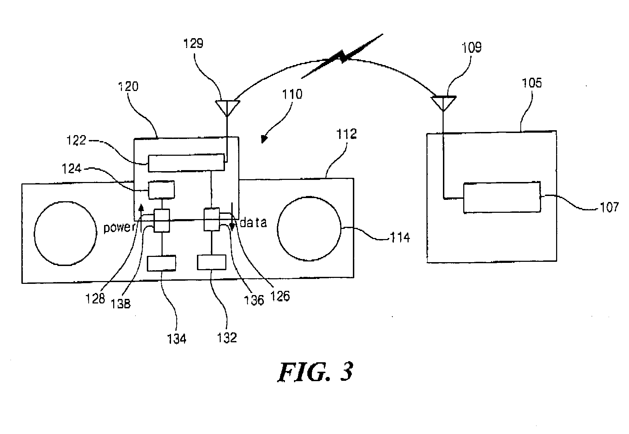

FIG. 2 is a schematic perspective view showing an external speaker system for a portable electrical equipment according to an embodiment of the present invention, and FIG. 3 is a schematic block diagram showing an external speaker system for a portable electrical equipment according to an embodiment of the present invention.

In FIGs. 2 and 3, an external speaker system includes a portable electrical equipment 105 and a speaker unit 110. The portable electrical equipment 105 such as a mobile phone and a portable MP3 player includes a wireless sending module 107 and a first antenna 109. The wireless sending module 107 transmits an audio signal generated in a micro processor unit (MPU) by reproducing an audio file through the first antenna 109 to the speaker unit 110. The speaker unit 110 includes a cradle 112, speakers 114 and a wireless receiving pack 120. The cradle 112 supports the wireless receiving pack 120 and the speakers 114 is formed on the cradle 112. The wireless receiving pack 120 detachable from the cradle 112 includes a wireless receiving module 122, a source power circuit 124, an audio output terminal 126, a power input terminal 128 and a second antenna 129. The wireless receiving module 122 receives the audio signal through the second antenna 129 from the wireless sending module 107. In addition, the wireless receiving module 122 is connected to the audio output terminal 126 to transmit the audio signal. The source power circuit 124 is connected to the power input terminal 128 to receive a source power from the cradle 112.

The communication method between the wireless sending module 107 and the wireless receiving module 122 is not restricted. For example, a method having an excellent compatibility and a high stability in transmission such as BLUETOOTH may be used for the communication.

The cradle 112 includes a reproducing circuit 132, a rectifying circuit 134, an audio input terminal 136 and a power output terminal 138. The reproducing circuit 132 is connected to the audio input terminal 136 to receive the audio signal. In addition, the reproducing circuit 132 may include an amplifying circuit amplifying the audio signal. The rectifying circuit 134 is connected to the power output terminal 138. The rectifying circuit 134 rectifies an external source power and supplies the source power to the source power circuit 124 of the wireless receiving pack 120 through the power output terminal 138 and the power input terminal 128.

The portable electrical equipment 105 may be directly supported by the cradle 112. The speakers 114 may be fixed to the cradle 112 as one body. In addition, the speakers 114 may be separated from the cradle 112 and be connected to the cradle 112 through a connection line in another embodiment.

Operation of the external speaker system for a portable electrical equipment according to the present invention will be illustrated hereinafter.

In the portable electrical equipment 105, an audio signal is generated by reproducing an audio file. The audio signal is transmitted from the wireless sending module 107 to the wireless receiving module 122 of the wireless receiving pack 120 through the first and second antennas 109 and 129. When the wireless receiving pack 120 is supported by.the cradle 112 of the speaker unit I 10, the audio output terminal 126 of the wireless receiving pack 120 is connected to the audio input terminal 136 of the cradle 112. Accordingly, the audio signal received by the wireless receiving module 122 is transmitted to the audio input terminal 136 of the cradle 112. Next, the audio signal is transmitted to the reproducing circuit 132 including an amplifying circuit and is amplified in the reproducing circuit 132. The amplified audio signal is transmitted to the speakers 114 and is outputted as a sound through the speakers 114.

The audio signal reproduced in the portable electrical equipment 105 is transmitted to and is outputted through the speaker unit 110 as long as the wireless sending module 107 of the portable electrical equipment 105 and the wireless receiving module 122 of the wireless receiving pack 120 in the cradle 112 are disposed in a data-transmittable area. Accordingly, a user may carry the portable electrical equipment 105 while he selects and enjoys music with the wireless receiving pack 120 instead of the portable electrical equipment 105 supported by the cradle 112.

further, an external source power is supplied from a power supply such as a household electric source and a battery to the cradle 112 of the speaker unit 110 to operate the reproducing circuit 132 and the speakers 114. When the wireless receiving pack 120 is supported by the cradle 112, the power input terminal 128 of the wireless receiving pack 120 is connected to the power output terminal 138 of the cradle 112. Accordingly, the external source power is rectified in the rectifying circuit 134 of the cradle 112 and is supplied to the wireless receiving pack 120 as the source power through the power output terminal 138 and the power input terminal 128. Next, the source power is supplied to the wireless receiving module 122 through the source power circuit 124. As a result, an additional power supplying means for operating the wireless receiving pack 120 is not required because the source power is automatically supplied to the wireless receiving pack 120 while the wireless receiving pack 120 is supported by the cradle 112.

Consequently, in a speaker system for a portable electrical equipment according to the present invention, since an audio signal reproduced in the portable electrical equipment is telecommunicated to and is outputted through a speaker unit, convenience in enjoyment of music using a portable electrical equipment is improved. In addition, since a wireless receiving pack instead of a portable electrical equipment is supported by a speaker unit, the portable electrical equipment is carried by a user while the portable electrical equipment is operated.

It will be apparent to those skilled in the art that various modifications and variations can be made in a speaker system for a portable electrical equipment of the present invention without departing from the spirit or scope of the invention. Thus, it is intended that the present invention cover the modifications and variations of this invention provided they come within the scope of the appended claims and their equivalents.

## Claims

1. A speaker system for a portable electrical equipment, comprising:
a wireless receiving pack receiving an audio signal from the portable electrical equipment; and
a speaker unit receiving the audio signal from the wireless receiving pack and outputting the audio signal as a sound, the speaker unit connected to the wireless receiving pack.

2. The speaker system according to claim 1, wherein the portable electrical equipment generates the audio signal using an audio file.

3. The speaker system according to claim 1, wherein the portable electrical equipment includes one of a mobile phone and a portable MP3 player.

4. The speaker system according to claim 1, wherein the portable electrical equipment includes a wireless sending module.

5. The speaker system according to claim 4, wherein the wireless receiving pack comprises:
a wireless receiving module receiving the audio signal from the wireless sending module;
a source power circuit supplying a source power to the wireless receiving module;
an audio output terminal connected to the wireless receiving module; and
a power input terminal connected to the source power circuit.

6. The speaker system according to claim 5, wherein a telecommunication between the wireless sending module and the wireless receiving module is preformed by a BLUETOOTH method.

7. The speaker system according to claim 5, wherein the speaker unit comprises:
a cradle supporting the wireless receiving pack; and
at least one speaker connected to the cradle.

8. The speaker system according to claim 7, wherein the cradle comprises:
an audio input terminal contacting the audio output terminal;
a reproducing circuit connected to the audio input terminal;
a power output terminal contacting the power input terminal; and
a rectifying circuit connected to the power output terminal.

9. The speaker system according to claim 8, wherein the audio signal is transmitted from the wireless receiving module to the at least one speaker through the audio output terminal, the audio input terminal and the reproducing circuit.

10. The speaker system according to claim 8, wherein the reproducing circuit includes an amplifying circuit to amplify the audio signal.

11. The speaker system according to claim 8, wherein the rectifying circuit rectifies an external source power and.

12. The speaker system according to claim 11, wherein the rectified external source power is transmitted from the rectifying circuit to the source power circuit as the source power through the power output terminal and the power input terminal.

13. The speaker system according to claim 7, wherein the at least one speaker is fixed to the cradle as one body.

14. The speaker system according to claim 7, wherein the at least one speaker is connected to the cradle through a connection line.

15. The speaker system according to claim 1, wherein the wireless receiving pack is detachable from the speaker unit.

16. A wireless receiving pack for a speaker unit and a portable electrical equipment, comprising:
a wireless receiving module receiving an audio signal from the portable electrical equipment;
an audio output terminal contacting the speaker unit and transmitting the audio signal to the speaker unit; and
a power input terminal contacting the speaker unit and receiving a source power from the speaker unit,
wherein the wireless receiving pack instead of the portable electrical equipment is detachably supported by the speaker unit.

## Amended claims

### Amended claims in accordance with Rule 137(2) EPC.

**1.** A speaker system for a portable electrical equipment (105), comprising:
a wireless receiving pack (120) receiving an audio signal from the portable electrical equipment (105); and
a speaker unit (110) receiving the audio signal from the wireless receiving pack (120) and outputting the audio signal as a sound, the speaker unit (110) being connected to the wireless receiving pack (120), **characterized in that** the wireless receiving pack (120) is detachable from the speaker unit (110) and a cradle (112) of the speaker unit (110) can either support the wireless the receiving pack (120) or the portable electrical equipment (105).

**2.** The speaker system according to claim 1, **characterized in that** the portable electrical equipment (105) generates the audio signal using an audio file.

**3.** The speaker system according to claim 1, **characterized in that** the portable electrical equipment (105) includes one of a mobile phone and a portable MP3 player.

**4.** The speaker system according to claim 1, **characterized in that** the portable electrical equipment (105) includes a wireless sending module (107).

**5.** The speaker system according to claim 4, **characterized in that** the wireless receiving pack (120) comprises:
a wireless receiving module (122) receiving the audio signal from the wireless sending module (107);
a source power circuit (124) supplying a source power to the wireless receiving module (122);
an audio output terminal (126) connected to the wireless receiving module (122); and
a power input terminal (128) connected to the source power circuit (124).

**6.** The speaker system according to claim 5, **characterized in that** a telecommunication between the wireless sending module (107) and the wireless receiving module (122) is preformed by a BLUETOOTH method.

**7.** The speaker system according to claim 5, wherein the speaker unit (110) comprises:
a cradle (112) supporting the wireless receiving pack (120); and
at least one speaker (114) connected to the cradle (112).

**8.** The speaker system according to claim 7, **characterized in that** the cradle (112) comprises:
an audio input terminal (136) contacting the audio output terminal (126);
a reproducing circuit (132) connected to the audio input terminal (136);
a power output terminal (138) contacting the power input terminal (128); and
a rectifying circuit (134) connected to the power output terminal (138).

**9.** The speaker system according to claim 8, **characterized in that** the audio signal is transmitted from the wireless receiving module (122) to the at least one speaker (114) through the audio output terminal (126), the audio input terminal (136) and the reproducing circuit (132).

**10.** The speaker system according to claim 8, **characterized in that** the reproducing circuit (132) includes an amplifying circuit to amplify the audio signal.

**11.** The speaker system according to claim 8, **characterized in that** the rectifying circuit (134) rectifies an external source power.

**12.** The speaker system according to claim 11, **characterized in that** the rectified external source power is transmitted from the rectifying circuit (134) to the source power circuit (124) as the source power through the power output terminal (138) and the power input terminal (128).

**13.** The speaker system according to claim 7, **characterized in that** the at least one speaker (114) is fixed to the cradle (112) as one body.

**14.** The speaker system according to claim 7, **characterized in that** the at least one speaker (114) is connected to the cradle (112) through a connection line.

**15.** A wireless receiving pack for a speaker unit (110) and a portable electrical equipment (105), comprising:
a wireless receiving module (122) receiving an audio signal from the portable electrical equipment (105);
an audio output terminal (126) contacting the speaker unit (110) and transmitting the audio signal to the speaker unit (110); and
a power input terminal (128) contacting the speaker unit (110) and receiving a source power from the speaker unit (110), **characterized in that** the wireless receiving pack (120) insteads of the portable electrical equipment (105) is detachably supported by the speaker unit (110), wherein a cradle (112) of the speaker unit (110) can either support the wireless receiving pack (120) or the electrical equipment (105).
